# FASCICULE DE BREVET EUROPEEN

(11) **EP 0 505 222 B1**
(45) Date de publication et mention de la délivrance du brevet: **29.03.2000**
(21) Numéro de dépôt: 92400387.4
(22) Date de dépôt: 13.02.1992
(51) Int. Cl.: F25D 3/11, F25D 25/04

(54) **Procédé de congélation**
Verfahren zum Gefrieren
Method for freezing

(30) Priorité: 21.03.1991 FR 9103430
(43) Date de publication de la demande: 23.09.1992
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lermuzeaux, André, F-94370 Sucy en Brie (FR)
(74) Mandataire: Vesin, Jacques

(56) Documents cités:
- WO-A-90/06693
- FR-A- 1 076 243
- FR-A- 2 212 521
- GB-A- 1 241 320
- GB-A- 1 344 513
- US-A- 3 228 838
- US-A- 3 498 070
- US-A- 3 611 745
- US-A- 4 655 047
- US-A- 4 843 840

## Description

La présente invention concerne un procédé et un dispositif pour la congélation d'un produite. solide ou pateux, notamment d'un produit alimentaire, en vue de la congélation d'au moins une de ses surfaces.

La congélation de produits alimentaires se fait habituellement dans des tunnels de congélation où le froid est obtenu par des moyens mécaniques.

Ces produits alimentaires que l'on cherche à congeler sont souvent collants et adhèrent aux tapis roulants du tunnel de congélation sur lesquels ils sont convoyés, posant ainsi un problème d'entretien et d'hygiène.

De plus, ces produits peuvent être peu compacts et se disloquent facilement, perdant de ce fait, lors de leur manutention, la forme qu'on veut leur conférer. C'est par exemple, le cas des boulettes de purée de légumes, extrêmement difficiles à manipuler.

On a déjà proposé des procédés pour congeler des produits alimentaires selon lesquels on place les produits à congeler sur un support métallique dont la température a été préalablement abaissée de telle sorte que seule la surface des produits en contact avec le support métallique soit congelée. La température du support peut être par exemple abaissée au moyen d'un gaz cryogénique circulant dans une rigole placée en dessous dudit support. Selon la nature du support et sa conductivité thermique, des températures de l'ordre de -60°C à -90°C peuvent être atteintes.

Toutefois, il a pu être constaté que ces procédés pouvaient présenter des inconvénients, en particulier lors du traitement de produits particulièrement collants, tels des boulettes de purée de légumes.

Selon ces procédés, ces boulettes adhèrent à la paroi jusqu'à ce que leur surface ait pu être refroidie suffisamment, induisant ainsi un temps de latence, retardant le traitement de produits en amont de la ligne de production.

Un tel temps de latence peut alors entraîner une baisse notable de productivité.

Le document WO 90/06693 illustre un tel état de la technique, où l'on note que cette première étape de congélation de surface par contact avec un support refroidi est immédiatement suivi d'une opération de congélation totale à coeur des produits par passage dans un tunnel adjacent.

Mais, on pourra également se reporter aux documents US-3,228,838, US-3,498,070, et US-4,843,840, qui concernent la congélation de produits liquides susceptibles d'être délivrés en goutte, congélation totale intégrant au besoin une étape d'immersion complète du produit dans un bain de liquide cryogénique.

Le procédé selon la présente invention permet d'éviter l'adhésion des produits à congeler sur le support, même lorsqu'ils sont très collants, autorisant alors une productivité notablement améliorée et une grande facilité d'entretien.

De plus, selon un tel procédé, la nature du support est de peu d'importance, en particulier le support n'a pas à être d'un matériau bon conducteur de la chaleur. Selon un autre aspect du procédé de l'invention, on peut facilement adapter les moyens mis en oeuvre à tout type de produits à congeler, et ce par des réglages simples.

La présente invention concerne donc un procédé de congélation d'un produit, notamment d'un produit alimentaire, tel que revendiqué au niveau de la Revendication 1 ci-après.

On a pu ainsi constater que d'une manière surprenante, des produits, même très collants, n'adhèrent aucunement au support, ceci malgré une épaisseur dudit film qui peut être très faible.

Sans être lié à une explication théorique, on estime que le produit traité flotte à la surface du film de gaz liquéfié par un phénomène de caléfaction, obviant ainsi tout risque d'adhésion sur le support. De plus, le contact direct entre le produit et le film de gaz liquéfié dont la température peut être très basse, permet une congélation quasi immédiate des surfaces du produit au contact du film de gaz liquéfié.

Dans le cadre de l'invention, les produits à congeler sont essentiellement des produits alimentaires, qui peuvent être à l'état solide, en particulier des tranches de poissons ou de viandes, hachées ou non, des gâteaux, des pizzas, des légumes entiers ou coupés, ou à l'état pâteux, telles des boulettes de purée de légumes.

Outre des produits alimentaires, on peut également traiter des produits industriels tels des matières grasses ou des cires dont les points de fusion sont proches de la température ambiante. Le procédé selon l'invention convient tout particulièrement au traitement de produits solides ou pâteux mis en forme et dont on veut congeler la surface inférieure en contact direct avec le film de gaz liquéfié. Ces produits présentent généralement une surface au contact du film dont la diagonale la plus longue a une longueur supérieure à 1 cm, le plus souvent supérieure à 3 cm. Leur épaisseur est typiquement comprise entre 1 et 20 cm.

Le film de gaz liquéfié est généralement constitué d'un gaz non toxique dont le point d'ébullition est avantageusement inférieur à -150°C. De préférence ledit gaz liquéfié est l'azote liquide.

Habituellement, l'épaisseur du film de gaz liquéfié est, en moyenne, inférieure à 10 mm, et de préférence comprise entre 2 et 5 mm. De manière particulièrement avantageuse, le film de gaz liquéfié est mobile à la surface du support. La vitesse d'écoulement dont il est animé est généralement inférieure à 1,5 m/s et de préférence comprise entre 0,1 et 1 m/s. L'épaisseur du film, de même que sa vitesse sont essentiellement contrôlées par le débit en gaz liquéfié alimentant le support et, lorsque le support présente une pente descendante, par le degré d'inclinaison de la pente. L'homme du métier est parfaitement à même d'ajuster ledit débit et, le cas échéant, ladite pente, de sorte à obtenir l'épaisseur et la vitesse désirées. Lorsque le support présente une pente descendante, celle-ci est de préférence inférieure à 10 cm/m, généralement comprise entre 1 et 5 cm/m. Le support sur lequel se trouve le film de gaz liquéfié est animé d'un mouvement vibratoire dont la fréquence varie selon la vitesse que l'on veut conférer au produit traité et donc du temps de contact désiré entre ledit produit et ledit film.

Généralement, cette fréquence est de l'ordre de 5 à 100 Hertz, plus généralement de l'ordre de 7 à 60 Hertz.

L'amplitude du mouvement vibratoire peut être telle que l'accélération du support soit comprise entre 20 et 100 m/s² . Cette amplitude est généralement comprise entre 0,2 et 20 mm, de préférence entre 0,3 et 15 mm.

Le temps de contact entre le film de gaz liquéfié et le produit peut également être réglé en fonction de l'angle entre la direction du mouvement vibratoire et le plan du support, qui est généralement compris entre 15 et 60 degrés. Ce temps de contact peut aussi être réglé par la longueur du support habituellement comprise entre 1 et 3 m et, le cas échéant, par sa pente. Généralement, on procède de sorte que le temps de contact entre le produit à congeler et le film de gaz liquéfié soit inférieur à 30 secondes de préférence inférieur à 15 secondes.

A la fin d'une opération selon le procédé de l'invention, on récupère par un moyen quelconque les produits dont l'une au moins des surfaces a été congelée, puis éventuellement on les congèle dans leur totalité, par exemple par un dispositif générant du froid mécanique tel un tunnel de congélation classique.

Le matériau dont est constitué le support n'est pas critique, dans la mesure où ce matériau peut résister aux basses températures et aux vibrations. Ainsi ce matériau peut être un métal ou un alliage, tel par exemple, l'aluminium ou l'acier, mais il peut aussi s'agir d'un matériau composite ou d'une céramique. Le support peut-être isolé par un matériau isolant telle une mousse, par exemple une mousse de polyuréthanne.

Le générateur de vibrations peut notamment être un système de ressorts, de bielles ou de lames flexibles.

Après séparation du produit dont l'une au moins des surfaces a été congelée, le gaz liquéfié constituant le film peut être recyclé par tout moyen adéquat, par exemple au moyen d'une pompe.

On peut utiliser selon l'invention une hotte aspirante pour éliminer les vapeurs de gaz liquéfié, une telle hotte peut par exemple être disposée au niveau de l'endroit où le film de gaz liquéfié et le produit congelé sont séparés.

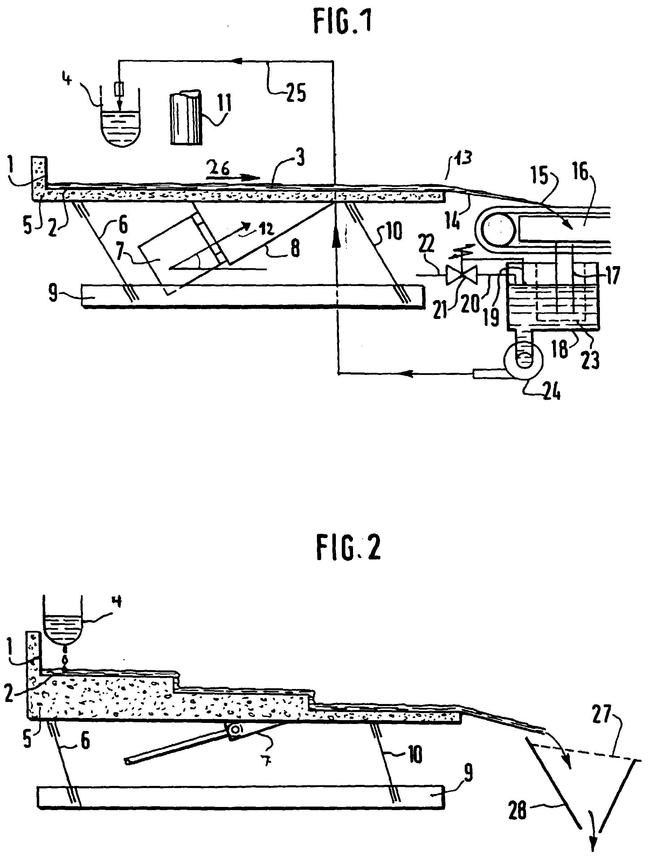

L'invention est maintenant décrite plus en détail par référence aux figures 1 et 2.
La figure 1 représente un dispositif dont le support horizontal est relié au tapis d'un tunnel de congélation classique.
La figure 2 représente un dispositif permettant la mise en oeuvre du procédé selon l'invention dont le support est étagé.

La figure 1 représente un dispositif permettant la mise en oeuvre du procédé selon l'invention comportant une auge 1 isolée par une mousse isolante 5, dont le fond forme un support 2 horizontal, sur la surface duquel circule un film d'azote liquide 3, alimenté en azote liquide au moyen d'une gouttière 4 perforée en son extrémité inférieure et disposée au-dessus du côté amont du support 2.

Le support 2 est relié par sa face inférieure à un système de suspensions 6 et 10 et à un générateur de vibrations 7 par l'intermédiaire d'une pièce support 8. Le système de suspension 6 et 10, et le générateur de vibrations 7 sont fixés sur un socle 9. Les produits à congeler, par exemple des boulettes de purée de légumes, sont déposés sur la surface du support 2 au moyen d'une conduite il terminant une chaîne de préparation et de mise en forme (non représentée).

Le fond de l'auge 1 formant support 2 est prolongé à son extrémité aval 13 par une plaque 14 qui débouche à l'entrée d'un tapis roulant 15 perforé, permettant le cas échéant de conduire les produits traités vers un tunnel de congélation (non représenté) en vue de leur congélation totale.

Sous le tapis roulant 15 est aménagée une enceinte de réception 16, reliée par un conduit d'écoulement 17 à une cuve 18 de récupération de l'azote liquide. La cuve 18 est munie d'un détecteur de niveau 19 et d'une conduite 20 munie d'une électrovanne 21 pilotée par le détecteur de niveau 19. L'électrovanne 21 est reliée par une conduite 22 à une source d'azote liquide (non représentée). Le conduit d'écoulement 17 est pourvue à son extrémité inférieure d'un filtre 23. La cuve 18 est également équipée d'une pompe 24, reliée par une conduite 25 à la gouttière 4.

Le dispositif décrit ci-dessus peut être mis en oeuvre comme suit: les produits à traiter tombent de la conduite 11 sur le film d'azote liquide 3 mobile.

Le mouvement vibratoire, dont la direction est indiquée par la flèche 12, créée par le générateur de vibrations 7, confère aux produits traités une accélération choisie, leur permettant de se déplacer à la surface du support 2 dans le sens de la flèche 26. Les produits dont la surface au contact du film a été congelée, débouchent sur la plaque 14, sont convoyés vers le tapis roulant 15 pour être le cas échéant conduits dans un tunnel de congélation en vue de les congeler totalement.

Le film d'azote liquide débouchant à l'extrémité aval 13 du support 2, après passage sur la plaque 14, s'écoule à travers les perforations du tapis roulant 15 dans l'enceinte de réception 16. Après passage dans la conduite d'écoulement 17, et à travers le filtre 23, l'azote liquide est récupéré dans la cuve 18. La pompe 24 permet le recyclage de l'azote liquide qui passe dans la conduite 25 et débouche dans la gouttière 4. Le débit d'azote liquide s'écoulant de la gouttière 4 sur le support 2, est choisi de sorte à conférer au film d'azote liquide, une épaisseur et une vitesse déterminées. Les pertes en azote liquide dues à l'évaporation sont compensées par addition d'azote liquide complémentaire dans la cuve 18.

La figure 2 représente une variante du dispositif selon l'invention où le fond de l'auge 1 formant support 2 est multi-étagé de sorte à permettre aux produits à traiter de se retourner et ainsi de congeler plusieurs de leurs surfaces. La récupération des produits congelés peut se faire par exemple au moyen d'une grille inclinée 27 disposée sur un entonnoir 28. L'azote liquide peut être recyclé de la manière décrite ci-dessus en vue d'alimenter le film d'azote liquide.

Les exemples qui suivent illustrent la présente invention :

### Exemple 1 :

En vue de la congélation de cubes de volaille de 20 mm d'arête, on met en oeuvre un dispositif tel que celui représenté à la figure 1. La longueur du support 2 est ici de 1,2 m et sa largeur est de 0,21 m. Le support 2 est animé d'un mouvement vibratoire dont l'amplitude est de 3 mm et la fréquence de 25 Hertz. Le débit en azote liquide débouchant de la gouttière 4 est de 1000 l/h, de sorte que la vitesse d'écoulement du film d'azote liquide à la surface du support est de 0,3 m/s et son épaisseur moyenne de 5 mm.

Les cubes de volaille tombant de la conduite 11 sur le film d'azote liquide ont une température de 10°C. Le temps de contact des cubes de volaille avec le film d'azote est de 9 secondes, après quoi, lesdits cubes présentent une température de -2°C.

On a pu ainsi congeler la surface inférieure de 160 kg de cubes de volaille/h.

### Exemple 2 :

En vue de congeler des épinards en branches en forme de parallélépipède de 60 X 60 X 20 mm et de poids unitaire de 100 g, on met en oeuvre le même dispositif que celui de l'exemple 1, le support 2 ayant cette fois une longueur de 3 m et une largeur de 0,6 m. Les épinards tombant de la conduite 11 présentent une température de 15°C. Le temps de contact avec le film d'azote liquide est d'environ 25 secondes, après quoi les parallélépipèdes sont récupérés et présentent une température de -3,5°C.

On a pu ainsi traiter 800 kg/h d'épinards en branches de forme parallélépipédique, dont la surface inférieure a été congelée. Les épinards n'adhèrent aucunement à la surface du support 2 et, après récupération, peuvent être facilement manipulés en vue le cas échéant de leur congélation complète dans un tunnel de congélation.

## Revendications

1. Procédé de congélation partielle d'un produit solide ou pâteux, notamment d'un produit alimentaire, selon lequel on met en contact le produit, afin d'effectuer une congélation partielle du produit au niveau d'au moins une de ses surfaces, avec une surface réfrigérante, qui résulte de l'utilisation d'un support soit vibrant horizontal soit présentant une pente descendante, et d'un gaz liquéfié dont le point d'ébullition est inférieur à -30°C, le produit étant ensuite séparé de la surface réfrigérante,
caractérisé par la mise en oeuvre des mesures suivantes :
a) la surface réfrigérante est constituée d'un film de gaz liquéfié disposé sur ledit support ;
b) la diagonale la plus longue du produit a une longueur supérieure à 1 cm, et le plus souvent supérieure à 3 cm, et l'épaisseur du produit est comprise entre 1 et 20 cm ;
c) l'épaisseur du film de gaz liquéfié est inférieure à celle du produit à congeler.

2. Procédé selon la revendication 1, caractérisé en ce que l'épaisseur moyenne du film de gaz liquéfié est inférieure à 10 mm, et de préférence comprise entre 2 et 5 mm.

3. Procédé selon l'une des revendications 1 ou 2, caractérisé en ce que le point d'ébullition du gaz liquéfié est inférieur à -150°C.

4. Procédé selon la revendication 3, caractérisé en ce que le gaz liquéfié est l'azote liquide.

5. Procédé selon l'une des revendications précédentes, caractérisé en ce que l'on fait vibrer le dit support à une fréquence comprise entre 5 et 100 hertz, de préférence entre 7 et 60 hertz.

6. Procédé selon l'une des revendications précédentes, caractérisé en ce que l'on fait vibrer le dit support avec un mouvement vibratoire dont l'amplitude est comprise entre 0,2 et 20 mm.

7. Procédé selon l'une des revendications précédentes, caractérisé en ce que la direction du mouvement vibratoire et la surface du support forment un angle compris entre 15 et 60 degrés.

8. Procédé selon l'une des revendications précédentes, caractérisé en ce que ledit film de gaz liquéfié est mobile.

9. Procédé selon la revendication 8, caractérisé en ce que la vitesse d'écoulement dudit film est inférieure à 1,5 m/s, et de préférence comprise entre 0,1 et 1 m/s.

10. Procédé selon l'une des revendications précédentes, caractérisé en ce que l'on congèle uniquement la surface du produit en contact direct avec le gaz liquéfié.

## Claims

1. Method for partially freezing a solid or pasty product, particularly a food product, whereby, in order to partially freeze the product on at least one of its surfaces, the product is brought into contact with a refrigerating surface which results from the use of a support which is either a horizontal vibrating support or a support with a downward slope, and of a liquefied gas whose boiling point is below -30°C, the product then being separated from the refrigerating surface,
characterized by the use of the following measures:
a) the refrigerating surface consists of a film of liquefied gas placed on the said support;
b) the longest diagonal of the product is longer than 1 cm, and usually longer than 3 cm, and the thickness of the product is between 1 and 20 cm;
c) the thickness of the film of liquefied gas is less than that of the product that is to be frozen.

2. Method according to Claim 1, characterized in that the mean thickness of the film of liquefied gas is less than 10 mm and is preferably between 2 and 5 mm.

3. Method according to either of Claims 1 and 2, characterized in that the boiling point of the liquefied gas is below -150°C.

4. Method according to Claim 3, characterized in that the liquefied gas is liquid nitrogen.

5. Method according to one of the preceding claims, characterized in that the said support is made to vibrate at a frequency of between 5 and 100 hertz, preferably between 7 and 60 hertz.

6. Method according to one of the preceding claims, characterized in that the said support is made to vibrate with a vibratory movement whose amplitude is between 0.2 and 20 mm.

7. Method according to one of the preceding claims, characterized in that the direction of the vibratory movement and the surface of the support form an angle of between 15 and 60 degrees.

8. Method according to one of the preceding claims, characterized in that the said film of liquefied gas can move.

9. Method according to Claim 8, characterized in that the rate at which the said film flows is below 1.5 m/s and is preferably between 0.1 and 1 m/s.

10. Method according to one of the preceding claims, characterized in that only that surface of the product which is in direct contact with the liquefied gas is frozen.

## Patentansprüche

1. Verfahren zum Teilgefrieren eines festen oder pastösen Produkts, insbesondere eines Lebensmittelprodukts, bei dem man das Produkt zum Teilgefrieren des Produkts an mindestens einer seiner Oberflächen mit einer Kühlfläche in Berührung bringt, die sich aus der Verwendung eines entweder horizontalen schwingenden oder ein Gefälle aufweisenden Trägers und eines verflüssigten Gases, dessen Siedepunkt unter -30°C liegt, ergibt, und das Produkt dann von der Kühlfläche abnimmt,
dadurch gekennzeichnet, daß man die folgenden Maßnahmen trifft:
a) die Kühlfläche besteht aus einem Film aus auf den Träger aufgebrachtem verflüssigtem Gas;
b) die längste Diagonale des Produkts ist länger als 1 cm, meistens länger als 3 cm, und die Dicke des Produkts liegt zwischen 1 und 20 cm;
c) die Dicke des Films aus verflüssigtem Gas ist kleiner als die des zu gefrierenden Produkts.

2. Verfahren nach Anspruch 1, dadurch gekennzeichnet, daß die mittlere Dicke des Films aus verflüssigtem Gas weniger als 10 mm beträgt und vorzugsweise zwischen 2 und 5 mm liegt.

3. Verfahren nach Anspruch 1 oder 2, dadurch gekennzeichnet, daß der Siedepunkt des verflüssigten Gases unter -150°C liegt.

4. Verfahren nach Anspruch 3, dadurch gekennzeichnet, daß man als verflüssigtes Gas flüssigen Stickstoff einsetzt.

5. Verfahren nach einem der vorhergehenden Ansprüche, dadurch gekennzeichnet, daß man den Träger mit einer Frequenz zwischen 5 und 100 Hertz, vorzugsweise zwischen 7 und 60 Hertz, schwingen läßt.

6. Verfahren nach einem der vorhergehenden Ansprüche, dadurch gekennzeichnet, daß man den Träger mit einer Schwingbewegung mit einer Amplitude zwischen 0,2 und 20 mm schwingen läßt.

7. Verfahren nach einem der vorhergehenden Ansprüche, dadurch gekennzeichnet, daß die Richtung der Schwingbewegung und die Trägeroberfläche einen Winkel zwischen 15 und 60 Grad bilden.

8. Verfahren nach einem der vorhergehenden Ansprüche, dadurch gekennzeichnet, daß der Film aus verflüssigtem Gas beweglich ist.

9. Verfahren nach Anspruch 8, dadurch gekennzeichnet, daß die Strömungsgeschwindigkeit des Films weniger als 1,5 m/s beträgt und vorzugsweise zwischen 0,1 und 1 m/s liegt.

10. Verfahren nach einem der vorhergehenden Ansprüche, dadurch gekennzeichnet, daß man nur die Oberfläche des Produkts in direkten Kontakt mit dem verflüssigten Gas bringt.
